# EUROPEAN PATENT APPLICATION

(11) **EP 2 933 468 A1**
(43) Date of publication of application: **21.10.2015**
(21) Application number: 15161079.7
(22) Date of filing: 26.03.2015
(51) Int. Cl.: F02K 1/80, F01D 25/30

(54) **A PANEL ATTACHMENT SYSTEM AND A METHOD OF USING THE SAME**

(30) Priority: 15.04.2014 GB 201406742
(71) Applicant: Rolls-Royce plc, London SW1E 6AT (GB)
(72) Inventor: Gough, Adam, Derby, Derbyshire DE24 8BJ (GB)
(74) Representative: Rolls-Royce plc

(57) **Abstract**

A panel attachment system comprises a panel, a hanger, a plurality of anchors and a casing. The hanger comprises a hanger plate and a plurality of bosses. The hanger plate comprises a first edge and an opposite second edge with the plurality of bosses being spaced along the first edge of the hanger plate, and a plurality of slots being spaced along the second edge of the hanger plate, each of the slots having a first 'T'-shaped cross sectional area.

Each anchor comprises an elongate post portion superimposed by a planar cap portion with each anchor having a second 'T'-shaped cross sectional area.

In use, the hanger is removably secured to the casing by a plurality of fastening elements with each fastening element passing through a corresponding hole in the casing and being accommodated in a respective one of the plurality of bosses. The plurality of anchors is spaced along a first surface of the panel with each post portion being secured to and protruding from the first surface of the panel, the spacing between adjacent anchors corresponding to the spacing between adjacent slots in the second edge of the hanger plate, with each slot receivably accommodating a respective one of the anchors to secure the panel to the casing.

## Description

### Field of the Invention

The present invention relates to a panel attachment system and particularly, but not exclusively, to a panel attachment system for an exhaust gas duct.

### Background to the Invention

The exhaust duct for a gas turbine engine is conventionally a circular duct which connects to the turbine stage outlet of the engine. The use of a circular duct is convenient since it can be readily connected to the turbine outlet of the engine. In addition, thermal expansion of the exhaust duct resulting from the heat of the exhaust gas flow may be readily accommodated by the radial growth of the exhaust duct.

However, in many gas turbine engine installations it is desirable for the exit portion of the exhaust duct to be non-circular because this can make the mechanical installation of the exhaust duct into its supporting structure easier and more convenient.

In particular it is advantageous for the exhaust duct to be rectilinear in cross-section to facilitate the mounting of the exhaust duct within its surrounding structure.

Due to the need to accommodate dimensional changes in the exhaust duct resulting from the hot exhaust gases passing through the exhaust duct it is known to provide a duct mounting arrangement that independently accommodates both axial and lateral growth of the exhaust duct resulting from thermal expansion of the duct. Such mounting arrangements are required to accommodate movement of the duct both axially and laterally and can be mechanically complicated.

It is an object of the present invention to provide a mounting arrangement for a non-circular cross-section exhaust duct that supports the exhaust duct.

Previous jet pipe liner hanger systems have used expensive machined parts to control exhaust duct liner location and require a high number of part variations, making the assembly complicated. Furthermore, large numbers of hangers can obstruct the airflow passing between surfaces, impacting the effectiveness of the air supply.

### Statements of Invention

According to a first aspect of the present invention there is provided a panel attachment system comprising:
a panel;
a hanger comprising:
   a hanger plate; and
   a plurality of bosses;
a plurality of anchors; and
a casing;
whereby the hanger plate comprises a first edge and an opposite second edge, the plurality of bosses being spaced along the first edge of the hanger plate, and a plurality of slots being spaced along the second edge of the hanger plate, each of the slots having a first 'T'-shaped cross sectional area;
each anchor comprises an elongate post portion superimposed by a planar cap portion, and each anchor having a second 'T'-shaped cross sectional area;
wherein, in use, the hanger is removably secured to the casing by a plurality of fastening elements, each fastening element passing through a corresponding hole in the casing and being accommodated in a respective one of the plurality of bosses; and
the plurality of anchors is spaced along a first surface of the panel with each post portion being secured to and protruding from the first surface of the panel, the spacing between adjacent anchors corresponding to the spacing between adjacent slots in the second edge of the hanger plate, with each slot receivably accommodating a respective one of the anchors to secure the panel to the casing.

The use of a hanger in the form of a plate or thin sheet material results in minimal restriction to a gas flow passing through the space between the casing and the panel. This results in efficient cooling of both the casing and the panel by the gas flowing therebetween.

A further advantage of the hanger being formed as a plate or thin sheet is that the load carried from the panel to the casing can be uniformly distributed across the hanger plate. This makes the system of the invention extremely weight efficient and thus advantageous for use in weight-critical applications such as aerospace.

Optionally, the each of plurality of bosses is removably secured to the first edge of the hanger plate.

In one arrangement, the plurality of bosses may be attached to the first edge of the hanger plate by threaded fasteners, such as nuts and bolts. This allows for quick and easy assembly of the panel to the casing. It also allows for straightforward repair and maintenance of the panel and casing assembly once in service.

Optionally, each of the plurality of anchors is removably secured to the first surface of the liner.

In one arrangement, the plurality of anchors may be attached to the first surface of the liner by threaded fasteners, such as nuts and bolts. This allows for quick and easy assembly of the panel to the casing. It also allows for straightforward repair and maintenance of the panel and casing assembly once in service.

Optionally, the planar portion of each of the plurality of anchors is circular in plan view.

Forming the planar portion of each anchor as a disc makes the anchor easier and cheaper to manufacture.

A further advantage of the planar portion of the anchor being circular in plan view is that the rotational orientation of the anchor relative to the hanger plate becomes unimportant. This makes the system of the invention easier and more cost effective for a user.

Optionally, the planar portion of each of the plurality of anchors is rectilinear in plan view.

This makes the efficient location of the hanger plate by the anchor less sensitive to any misalignment between the lateral position of the anchor relative to the plane of the hanger plate. This makes the system of the invention easier and more cost effective for a user.

Optionally, the hanger panel comprises one or more apertures.

Removing material from a mid-portion of the hanger plate (i.e. between the first edge and the second edge) enables the weight of the hanger plate to be reduced. This makes the system of the invention more weight efficient.

Optionally, each of the plurality of anchors is formed from a material selected from the group comprising metals, metal alloys, plastics, and fibre-reinforced composite materials.

In one embodiment of the invention the anchors are formed as an aluminium alloy casting. The use of a common geometry for the anchors makes the system easy and cheap to install.

In other embodiments the anchors may be formed from another metal or metal alloy, for example as an investment casting. Alternatively, the anchor may be moulded from a plastic material or a fibre-reinforced composite material.

Optionally, the second 'T'-shaped cross sectional area is dimensioned to be between approximately 75% to 90% of the first 'T'-shaped cross sectional area.

In use the panel is in direct contact with and absorbs heat energy from an exhaust gas stream. This heat energy is transmitted to the attached anchors and thence to the hanger plate and the casing.

By providing a clearance between each of the anchors and corresponding ones of the slots in the hanger plate, the system of the invention can accommodate relative thermal expansion between the hanger plate and the panel.

Optionally, a predetermined gap is provided between a periphery of the second 'T'-shaped cross sectional area of each anchor, and a periphery of the first 'T'-shaped cross sectional area of each slot.

In use the panel is in direct contact with and absorbs heat energy from an exhaust gas stream. This heat energy is transmitted to the attached anchors and thence to the hanger plate and the casing.

By providing a clearance between each of the anchors and corresponding ones of the slots in the hanger plate, the system of the invention can accommodate relative thermal expansion between the hanger plate and the panel.

According to a second aspect of the present invention there is provided a method of using a panel attachment system, the panel attachment system comprising a panel, a hanger, a plurality of anchors, and a casing, the hanger comprising a hanger plate and a plurality of bosses, the hanger plate having a first edge and an opposite second edge, the plurality of bosses being spaced along the first edge, and a plurality of slots being spaced along the second edge, the method comprising the steps of:
a. positioning the panel relative to the casing such that each of the plurality of bosses is aligned with a corresponding hole in the casing;
b. locating a fastener in each of the holes and threadingly engaging each fastener with a corresponding one of the bosses to secure the hanger to the casing;
c. positioning each of the plurality of anchors along a first surface of the panel with the spacing between adjacent anchors corresponding to the spacing between adjacent slots; and
d. slidingly engaging each of the plurality of bosses with corresponding ones of the plurality of slots to attach the panel to the casing.

The use of a sliding engagement between the anchors and the hanger plate makes the system of the invention quick and simple to assemble and thus attractive for a user.

According to a third aspect of the present invention there is provided an exhaust system for a gas turbine engine comprising a panel attachment system as claimed in the first aspect of the invention.

According to a fourth aspect of the present invention there is provided an aircraft comprising an exhaust system according to the third aspect of the invention.

Other aspects of the invention provide devices, methods and systems which include and/or implement some or all of the actions described herein. The illustrative aspects of the invention are designed to solve one or more of the problems herein described and/or one or more other problems not discussed.

### Brief Description of the Drawings

There now follows a description of an embodiment of the invention, by way of nonlimiting example, with reference being made to the accompanying drawings in which:
Figure 1 shows an end view of a panel attachment system according to a first embodiment of the invention;
Figure 2 shows a partial perspective view of the panel attachment system of Figure 1;
Figure 3 shows a perspective view of an anchor forming part of the panel attachment system of Figure 1; and
Figure 4 shows a partial end view of the anchor attachment of the panel attachment system of Figure 1.

It is noted that the drawings may not be to scale. The drawings are intended to depict only typical aspects of the invention, and therefore should not be considered as limiting the scope of the invention.

### Detailed Description

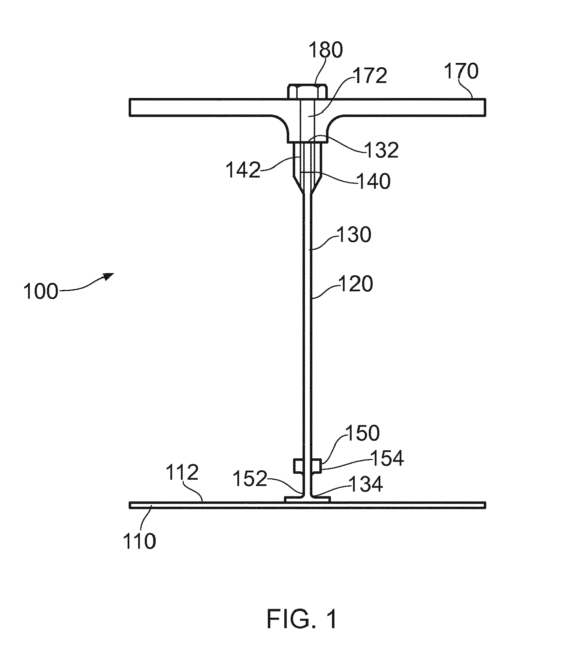

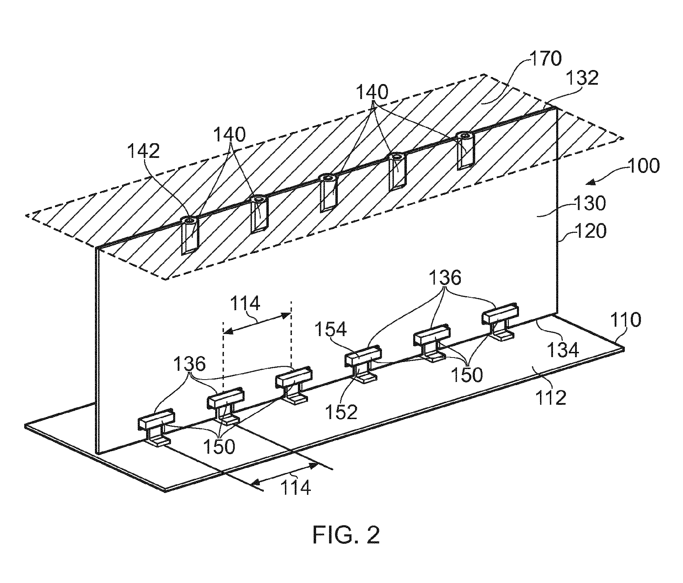

Referring to Figures 1 and 2, a panel attachment system according to an embodiment of the invention is designated generally by the reference numeral 100.

The panel attachment system 100 comprises a panel 110, a hanger 120, a plurality of anchors 150 and a casing 170. In the present embodiment the panel 110 forms part of the exhaust duct (not shown) of a gas turbine engine (also not shown) for use in an aerospace application, for example as an aircraft powerplant.

The hanger 120 comprises a hanger plate 130 together with a plurality of bosses 140. The hanger plate 130 is formed from sheet metal, such as a titanium alloy sheet having a typical thickness of approximately 1.5 mm. In other arrangements the hanger plate 130 may be formed from a different metal or metal alloy and/or may have a different thickness.

The hanger plate 130 has a first edge 132 and an opposite second edge 134. In the arrangement shown in Figures 1 and 2 the hanger plate 130 is rectangular in shape with the first edge 132 and the second edge 134 being substantially parallel to one another. In other arrangements, the hanger plate 130 may have a quadrilateral shape in which the first edge 132 and the opposite second edge 134 are not parallel to one another.

The plurality of bosses 140 are spaced along and attached to the first edge 132 of the hanger plate 130. In the arrangement shown the bosses 140 are formed from a titanium alloy material and provided with an internal threaded portion 142.

Each of the bosses 140 is welded to the first edge 132 of the hanger plate 130. In other arrangements of the invention, the bosses may be removably attached to the first edge 132 of the hanger plate 130, for example by means of threaded fasteners or rivets. In other arrangements the bosses 140 may be formed from another material compatible with the joining technique used to connect them to the hanger plate 130.

The hanger plate 130 further comprises a plurality of slots 136 arranged along the second edge 134. Each of the slots 136 is 'T'-shaped and has a first 'T'-shaped cross-sectional area 138. The slots 136 are arranged along the second edge 134 at intervals 114.

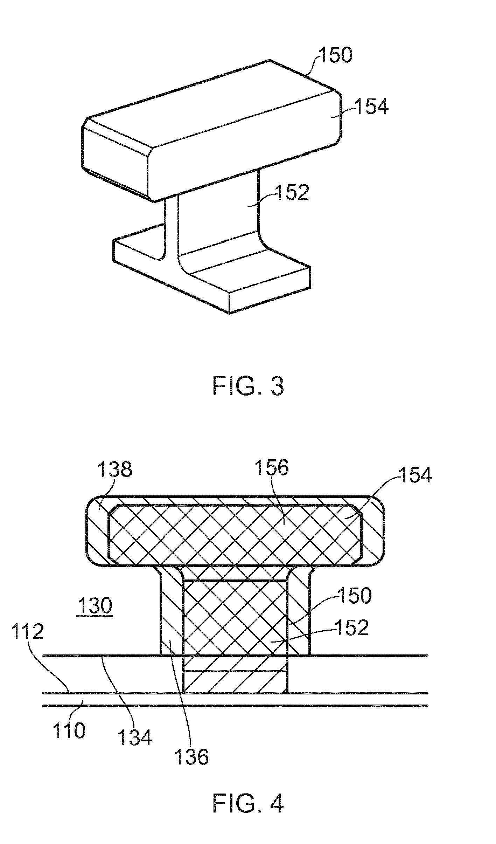

Each of the plurality of anchors 150 (shown in more detail in Figures 3 and 4) comprises an elongate post portion 152 superposed by a planar cap 154. In the arrangement shown in the figures the anchor further comprises a base portion 151 attached to the opposite end of the post portion 152 to the planar cap 154.

In the present arrangement, the planar cap 154 is rectilinear in plan view. In other arrangements the planar cap 154 may be circular in plan view. In each of these variants the anchors 150 are 'T'-shaped in section and have a second 'T'-shaped cross sectional area 156.

The anchors 150 of the present arrangement are formed as titanium alloy investment castings. In other arrangements the anchors 150 may be formed from an alternative material.

The anchors 150 are attached to and protrude from a first surface 112 of the panel 110. In the present arrangement the anchors 150 are arranged in a linear formation along the first surface 112 with spacing 114 between adjacent anchors 150.

In the arrangement shown in the figures the anchors 150 are removably attached to the first surface 112 by means of threaded fasteners (not shown). In other arrangements, the anchors 150 may be attached to the first surface 112 by any other suitable means such as, for example, welding or riveting.

In the present arrangement, the second 'T'-shaped cross-sectional area 156 is smaller than the first 'T'-shaped cross-sectional area 138 (see Figure 4). Specifically, the second 'T'-shaped cross sectional area is dimensioned to be between approximately 75% to 90 % of the first 'T'-shaped cross sectional area. In other words, the cross sectional area of the protruding portion of the anchor 150 is smaller than the cross-sectional area of the 'T'-shaped slot in the hanger plate.

This difference in cross-sectional area allows for differential movement between the hanger plate and the anchor, for example caused by differential thermal expansion of these components.

While the embodiment of the invention described above relates to the use of the panel attachment system in an exhaust system of an aircraft gas turbine engine, the system of the invention may equally be applied to use in other applications in which a heated gas flow is to be ducted.

The foregoing description of various aspects of the invention has been presented for purposes of illustration and description. It is not intended to be exhaustive or to limit the invention to the precise form disclosed, and obviously, many modifications and variations are possible. Such modifications and variations that may be apparent to a person of skill in the art are included within the scope of the invention as defined by the accompanying claims.

## Claims

1. A panel attachment system (100) comprising:
a panel (110);
a hanger (120) comprising:
a hanger plate (130); and
a plurality of bosses (140);
a plurality of anchors (150); and
a casing (170);
whereby the hanger plate (130) comprises a first edge (132) and an opposite second edge (134), the plurality of bosses (140) being spaced along the first edge (132) of the hanger plate (130), and a plurality of slots (136) being spaced along the second edge (134) of the hanger plate (130), each of the slots (136) having a first 'T'-shaped cross sectional area (138);
each anchor (150) comprises an elongate post portion (152) superimposed by a planar cap portion (154), and each anchor (150) having a second 'T'-shaped cross sectional area (156);
wherein, in use, the hanger (120) is removably secured to the casing (170) by a plurality of fastening elements, each fastening element passing through a corresponding hole in the casing (170) and being accommodated in a respective one of the plurality of bosses(140); and
the plurality of anchors (150) is spaced along a first surface (112) of the panel (110) with each post portion (152) being secured to and protruding from the first surface (112) of the panel (110), the spacing between adjacent anchors (150) corresponding to the spacing (114) between adjacent slots (136) in the second edge (134) of the hanger plate (130), with each slot receivably accommodating a respective one of the anchors to secure the panel (110) to the casing (170).

2. The panel attachment system (100) as claimed in Claim 1, wherein the each of plurality of bosses (140) is removably secured to the first edge (132) of the hanger plate (130).

3. The panel attachment system (100) as claimed in Claim 1 or Claim 2, wherein each of the plurality of anchors (150) is removably secured to the first surface (112) of the panel (110).

4. The panel attachment system (100) as claimed in any one of Claims 1 to 3, wherein the planar portion of each of the plurality of anchors (150) is circular in plan view.

5. The panel attachment system (100) as claimed in any one of Claims 1 to 3, wherein the planar portion (154) of each of the plurality of anchors (150) is rectilinear in plan view.

6. The panel attachment system (100) as claimed in any one of Claims 1 to 5, wherein the hanger panel (130) comprises one or more apertures.

7. The panel attachment system (100) as claimed in any one of Claims 1 to 6, wherein each of the plurality of anchors (150) is formed from a material selected from the group comprising metals, metal alloys, plastics, and fibre-reinforced composite materials.

8. The panel attachment system (100) as claimed in any one of Claims 1 to 7, wherein the second 'T'-shaped cross sectional area (156) is dimensioned to be between approximately 75% to 90% of the first 'T'-shaped cross sectional area (138).

9. The panel attachment system (100) as claimed in any one of Claims 1 to 8, wherein a predetermined gap is provided between a periphery of the second 'T'-shaped cross sectional area (156) of each anchor (150), and a periphery of the first 'T'-shaped cross sectional area (138) of each slot (136).

10. A method of using a panel attachment system (100), the panel attachment system (100) comprising a panel (110), a hanger (120), a plurality of anchors (150), and a casing (170), the hanger (120) comprising a hanger plate (130) and a plurality of bosses (140), the hanger plate (130) having a first edge (132) and an opposite second edge (134), the plurality of bosses (140) being spaced along the first edge (132), and a plurality of slots (136) being spaced along the second edge (134), the method comprising the steps of:
a. positioning the panel (110) relative to the casing (170) such that each of the plurality of bosses (140) is aligned with a corresponding hole in the casing (170);
b. locating a fastener in each of the holes and threadingly engaging each fastener with a corresponding one of the bosses (140) to secure the hanger (120) to the casing (170);
c. positioning each of the plurality of anchors (100) along a first surface (112) of the panel (110) with the spacing between adjacent anchors (150) corresponding to the spacing between adjacent slots (136); and
d. slidingly engaging each of the plurality of bosses (140) with corresponding ones of the plurality of slots (136) to attach the panel (110) to the casing (170).

11. An exhaust system for a gas turbine engine comprising a panel attachment system (100) as claimed in any one of Claims 1 to 9.

12. An aircraft comprising an exhaust system as claimed in Claim 11.
